# FASCICULE DE BREVET EUROPEEN

(11) **EP 1 574 121 B1**
(45) Date de publication et mention de la délivrance du brevet: **20.12.2006**
(21) Numéro de dépôt: 05101622.8
(22) Date de dépôt: 03.03.2005
(51) Int. Cl.: A01D 34/66

(54) **MACHINE DE COUPE**
SCHNEIDMASCHINE
CUTTING MACHINE

(30) Priorité: 09.03.2004 FR 0402460
(43) Date de publication de la demande: 14.09.2005
(73) Titulaire: KUHN S.A., 67706 Saverne Cedex (FR)
(72) Inventeur: WOLFF, Michel, 67670, WALTENHEIM SUR ZORN (FR)

(56) Documents cités:
- EP-A- 0 839 443
- DE-U- 20 306 314
- DE-U1- 9 112 331

## Description

La présente invention se rapporte au domaine technique général du machinisme agricole. Elle concerne plus précisément une machine de coupe comportant :
- un mécanisme de coupe,
- une structure d'attelage destinée à être liée à un dispositif d'attelage d'un véhicule moteur, ladite structure d'attelage pouvant être soulevée ou abaissée par rapport au sol,
- une poutre porteuse liée d'une part audit mécanisme de coupe au moyen d'une première articulation pivot d'axe au moins sensiblement dirigé suivant une direction de travail, et d'autre part à ladite structure d'attelage au moyen d'une deuxième articulation pivot d'axe sensiblement parallèle à l'axe de ladite première articulation pivot,
- un organe de manoeuvre destiné à faire pivoter ledit mécanisme de coupe d'une position de travail où ledit mécanisme de coupe repose au moins partiellement sur le sol, à une position de transport où le mécanisme de coupe est pivoté vers le haut, et
- un dispositif limiteur destiné à limiter le pivotement vers le haut dudit mécanisme de coupe par rapport à ladite poutre porteuse autour de ladite première articulation pivot, de manière à arrêter ledit mécanisme de coupe dans une position intermédiaire lors de l'actionnement dudit organe de manoeuvre.

Une telle machine de coupe est décrite dans le document **DE 91 12 331 U1.** Sur cette machine connue, l'organe de manoeuvre est réalisé au moyen d'un vérin lié de manière pivotante d'une part à la structure d'attelage et d'autre part au mécanisme de coupe. Le dispositif limiteur est réalisé au moyen d'une bielle dont l'une des extrémités est liée de manière pivotante au mécanisme de coupe. L'autre extrémité de la bielle coulisse dans une gorge prévue sur la poutre porteuse. En regardant dans un sens allant du mécanisme de coupe vers la structure d'attelage, cette gorge dessine un premier tronçon relativement rectiligne et horizontal puis un brusque changement de direction vers le haut, et finalement un deuxième tronçon relativement rectiligne. Lors du travail, l'extrémité de la bielle coulisse sur le premier tronçon rectiligne de ladite gorge. Le mécanisme de coupe peut alors librement pivoter autour de ladite première articulation de manière à suivre les dénivellations du sol. Lorsque l'utilisateur commande un raccourcissement du vérin, ledit mécanisme de coupe pivote autour de ladite première articulation jusqu'à ce que l'extrémité de ladite bielle vienne s'appuyer contre le brusque changement de direction de la gorge. Le mécanisme de coupe s'arrête ainsi dans la position intermédiaire. Si l'utilisateur veut pivoter davantage le mécanisme de coupe afin d'atteindre la position de transport, il doit alors tirer sur une corde pour faire passer l'extrémité de ladite bielle au-dessus du changement brusque de direction. Avec cette machine de coupe connue, la mise en position de transport n'est pas pratique à effectuer. L'utilisateur doit en effet simultanément tirer sur la corde et commander le raccourcissement du vérin.

Le but de la présente invention est de simplifier la mise en position de transport d'une telle machine de coupe.

A cet effet, la machine de coupe selon la présente invention est caractérisée par le fait qu'elle comporte en sus un dispositif destiné à rendre automatiquement ledit dispositif limiteur inactif lorsque ladite structure d'attelage occupe une position haute par rapport au sol.

Lors du travail, la structure d'attelage occupe une position normale par rapport au sol. Le dispositif limiteur est donc actif. Si l'utilisateur agit sur l'organe de manoeuvre afin de faire pivoter le mécanisme de coupe vers le haut, ce dernier s'arrêtera alors dans la position intermédiaire. Pour mettre le mécanisme de coupe dans la position de transport, l'utilisateur place tout d'abord la structure d'attelage dans une position haute par rapport au sol en agissant par exemple sur le dispositif d'attelage du véhicule moteur. Grâce à la caractéristique principale de la présente invention, désormais le dispositif limiteur est avantageusement inactif. Par conséquent si l'utilisateur agit sur l'organe de manoeuvre afin de faire pivoter le mécanisme de coupe vers le haut, ce dernier pourra atteindre la position de transport. Avec la présente invention, l'utilisateur n'a plus à tirer sur une corde pour permettre la mise en position de transport de ladite faucheuse.

D'autres caractéristiques de l'invention, à considérer séparément ou dans toutes leurs combinaisons possibles, apparaîtront encore dans la description suivante d'exemples de réalisation non limitatifs de l'invention représentés sur les dessins annexés sur lesquels :
- la **figure 1** représente, vue de dessus, une faucheuse agricole selon la présente invention attelée à un tracteur,
- la **figure 2** représente, vue de devant et à une autre échelle, une faucheuse agricole selon la présente invention en position de travail,
- la **figure 3** représente la faucheuse de la figure 2 en position intermédiaire,
- la **figure 4** représente la faucheuse de la figure 2, la structure d'attelage étant en position haute par rapport au sol,
- la **figure 5** représente la faucheuse de la figure 4 lors de l'activation de l'organe de manoeuvre, la structure d'attelage étant en position haute par rapport au sol,
- la **figure 6** représente la faucheuse de la figure 2 en position de transport,
- la **figure 7** représente, vu de devant, un autre exemple de réalisation d'une faucheuse agricole selon la présente invention,
- la **figure 8** représente, vu de coté, un exemple de réalisation supplémentaire d'une faucheuse agricole selon la présente invention,
- la **figure 9** représente la faucheuse de la figure 8, la structure d'attelage étant en position haute par rapport au sol,
- la **figure 10** représente un agrandissement de la figure 9,
- la **figure 11** représente, vu de derrière, un autre exemple de réalisation d'une faucheuse agricole selon la présente invention,
- la **figure 12** représente, vu de derrière, un autre exemple de réalisation d'une faucheuse agricole selon la présente invention,
- les **figures 13a et 13b** représentent, en coupe, un agrandissement de l'organe de manoeuvre visible à la figure 7,
- la **figure 14** représente, vu de derrière, un autre exemple de réalisation d'une faucheuse agricole selon la présente invention,
- la **figure 15** représente, vu de derrière, un autre exemple de réalisation d'une faucheuse agricole selon la présente invention.

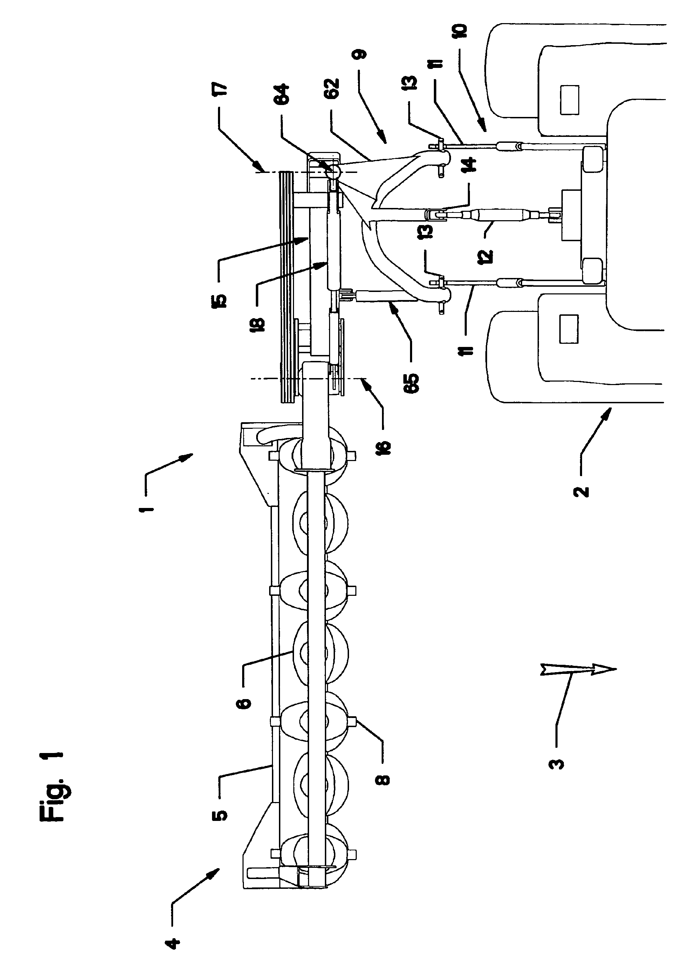

La figure 1 représente, vue de dessus, une machine de coupe conforme à la présente invention, et plus précisément une faucheuse (1). Ladite faucheuse (1) est attelée à un véhicule moteur (2) qui la tire suivant une direction et un sens d'avance représenté par la flèche (3). Dans la suite de la description, les notions suivantes "avant" et "arrière", "devant" et "derrière" sont définies par rapport au sens d'avance (3) et les notions "droite" et "gauche" sont définies en regardant ladite faucheuse (1) de l'arrière dans le sens d'avance (3).

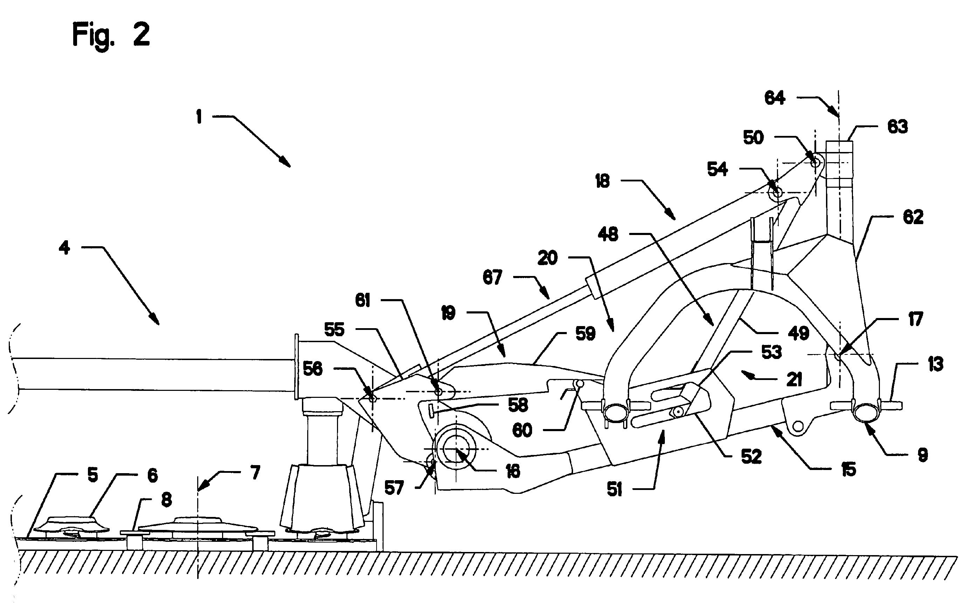

Ladite faucheuse (1) comporte un mécanisme de coupe (4) destiné à couper un produit sur pied, tel que de l'herbe par exemple. D'une manière connue de l'homme du métier, ledit mécanisme de coupe (4) comporte un carter (5) et des organes de coupe (6). Comme cela ressort notamment des figures 1 et 2, lors du travail, ledit carter (5) repose au moins partiellement sur le sol, transversalement à ladite direction d'avance (3). Lesdits organes de coupe (6) sont disposés côte à côte au-dessus dudit carter (5). De plus chaque organe de coupe (6) est lié de manière pivotante audit carter (5) au moyen d'une articulation respective d'axe (7) dirigé vers le haut. Lors du travail, lesdits organes de coupe (6) sont entraînés en rotation autour de leur axe respectif (7). Des éléments de coupe (8) disposés à la périphérie desdits organes de coupe (6) décrivent ainsi des cercles à grande vitesse et viennent couper le produit sur pied. Le mouvement de rotation desdits organes de coupe (6) provient d'une prise de force présente sur ledit tracteur (2). Des organes de transmission sont prévus pour acheminer le mouvement de rotation de ladite prise de force jusqu'à chaque organe de coupe (6). De tels organes de transmission sont connus de l'homme du métier. Il s'agit notamment d'arbres télescopiques à joints de cardan, de systèmes poulies-courroies, de carters de renvoi, et d'engrenages disposés à l'intérieur dudit carter (5).

Ladite faucheuse (1) comporte également une structure d'attelage (9) destinée à être liée à un dispositif d'attelage (10) dudit véhicule moteur (2). Dans l'exemple de réalisation représenté à la figure 1, ledit dispositif d'attelage (10) est avantageusement du type «3 points». Ainsi, d'une manière connue de l'homme de l'art, ledit dispositif d'attelage (10) comporte deux bras d'attelage inférieurs (11) et un bras d'attelage supérieur (12). Une extrémité de chaque bras d'attelage inférieur (11) est liée de manière pivotante au châssis dudit véhicule moteur (2). L'autre extrémité de chaque bras d'attelage inférieur (11) est liée de manière pivotante à un point d'attelage inférieur respectif (13) de ladite structure d'attelage (9). D'une façon analogue, une extrémité dudit bras d'attelage supérieur (12) est liée de manière pivotante au châssis dudit véhicule moteur (2). L'autre extrémité dudit bras d'attelage supérieur (12) est liée de manière pivotante à un point d'attelage supérieur (14) de ladite structure d'attelage (9). Ledit dispositif d'attelage (10) constitue ainsi un quadrilatère déformable capable de soulever ou d'abaisser ladite structure d'attelage (9) par rapport au sol. A cet effet, ledit dispositif d'attelage (10) comporte encore un ou plusieurs organes de manoeuvre, par exemple des vérins hydrauliques, destinés à faire pivoter lesdits bras d'attelage inférieurs (11) par rapport au châssis dudit véhicule moteur (2). Selon la norme ISO 730-1 régissant les dispositifs d'attelage du type « 3 points », entre la position la plus basse et la position la plus haute, la course verticale de l'extrémité du bras d'attelage inférieur (11) liée à la machine agricole est au minimum d'environ 70 centimètres. Ainsi à titre d'exemple, la course verticale de ladite structure d'attelage (9) entre une position de travail et une position haute par rapport au sol est au minimum de 10 centimètres.

Ladite faucheuse (1) comporte en sus une poutre porteuse (15). Une extrémité de ladite poutre porteuse (15) est liée audit mécanisme de coupe (4) au moyen d'une première articulation pivot (16) d'axe dirigé lors du travail au moins sensiblement suivant ladite direction d'avance (3). L'autre extrémité de ladite poutre porteuse (15) est liée à ladite structure d'attelage (9) au moyen d'une deuxième articulation pivot (17) dont l'axe est au moins sensiblement parallèle à l'axe de ladite première articulation (16). Ladite poutre porteuse (15), ladite première articulation (16) et ladite deuxième articulation (17) permettent avantageusement audit mécanisme de coupe (4) de suivre les dénivellations du sol indépendamment de la position dudit véhicule moteur (2).

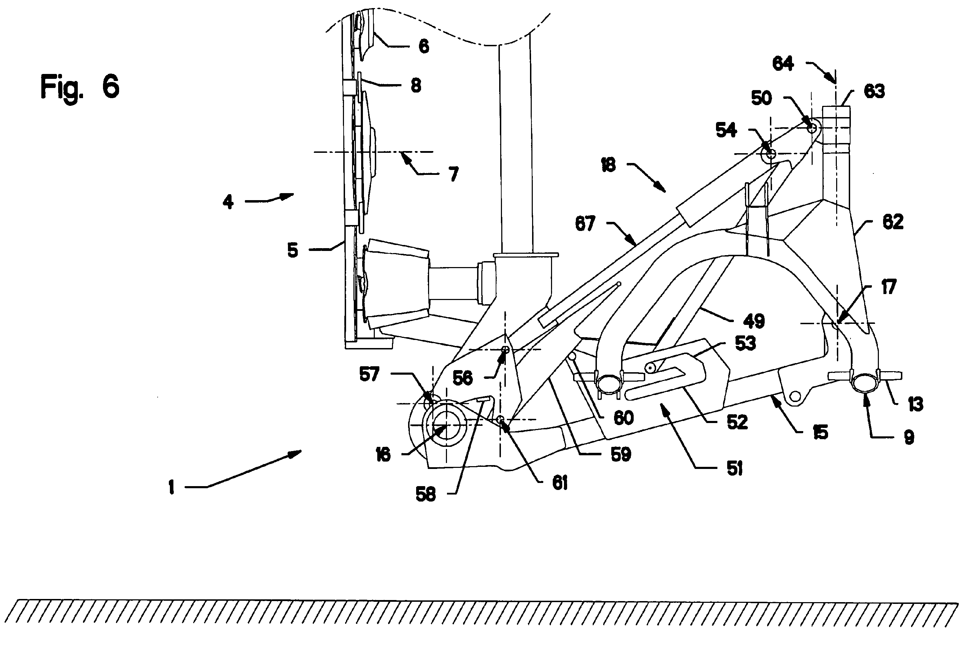

Ladite faucheuse (1) comporte encore un organe de manoeuvre (18) destiné à pivoter ledit mécanisme de coupe (4) vers le haut. Ledit organe de manoeuvre (18) permet ainsi à l'utilisateur d'amener ladite faucheuse (1) d'une position de travail à une position de transport, et inversement. Dans la position de travail telle que représentée sur les figures 1 et 2, ledit mécanisme de coupe (4) s'étend sur le coté dudit véhicule moteur (2) et ledit carter (5) repose au moins partiellement sur le sol. Ladite faucheuse (1) est ainsi en mesure de couper le produit sur pied. En position de transport et à la lumière de la figure 6, ledit mécanisme de coupe (4) est ramené par pivotement sensiblement dans le prolongement dudit véhicule moteur (2) afin de rendre compatible l'encombrement de ladite faucheuse (1) avec les lois régissant la circulation sur la voie publique.

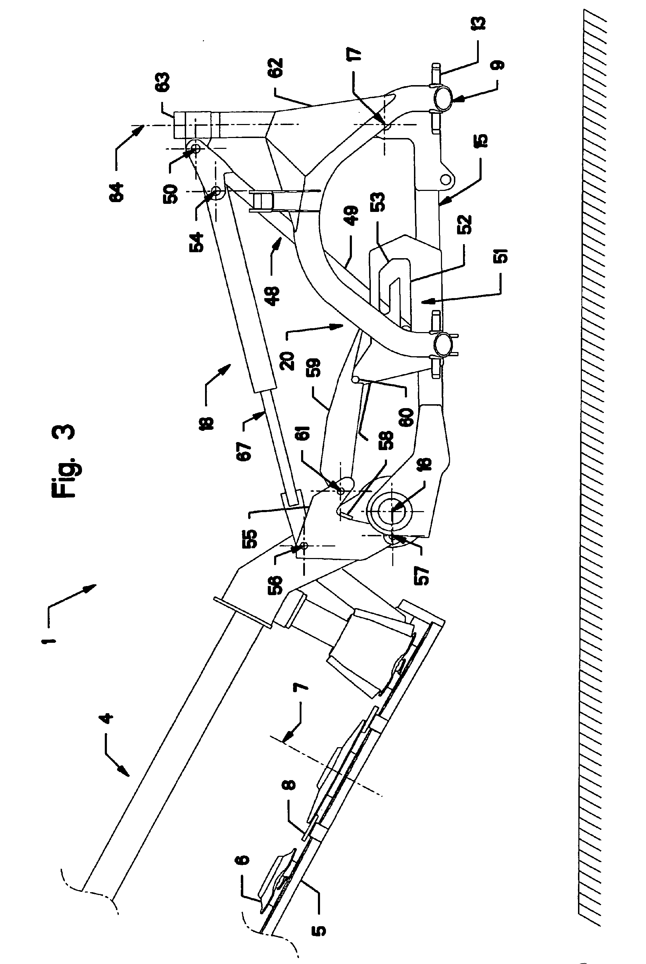

Ladite faucheuse (1) comporte en sus un dispositif limiteur (19) destiné à limiter le pivotement vers le haut dudit mécanisme de coupe (4) par rapport à ladite poutre porteuse (15) autour de ladite première articulation (16), de manière à arrêter ledit mécanisme de coupe (4) dans une position intermédiaire lors de l'actionnement dudit organe de manoeuvre (18). Dans cette position intermédiaire telle que représentée sur la figure 3, ledit mécanisme de coupe (4) s'étend encore sur le coté dudit véhicule moteur (2) mais ledit carter (5) est décollé du sol de manière à pouvoir passer au-dessus du produit sur pied ou du produit déjà coupé. Cette position intermédiaire de ladite faucheuse (1) est utilisée principalement lors des manoeuvres en bout de champs.

Selon une caractéristique importante de la présente invention, ladite faucheuse (1) comporte en sus un dispositif (20) destiné à rendre automatiquement ledit dispositif limiteur (19) inactif lorsque ladite structure d'attelage (9) occupe une position haute par rapport au sol.

A cet effet, ledit dispositif (20) se compose d'un moyen de détection (21) et d'un moyen d'action (22). Ledit moyen de détection (21) est destiné à déterminer si ladite structure d'attelage (9) est en position haute par rapport au sol. Pour sa part, ledit moyen d'action (22) est destiné à agir sur ledit dispositif limiteur (19) afin de le rendre inactif. Ledit moyen de détection (21) et ledit moyen d'action (22) sont reliés l'un à l'autre de manière à ce que ledit moyen d'action (22) puisse être commandé par ledit moyen de détection (21).

Il existe différentes façons de déterminer si ladite structure d'attelage (9) est en position haute par rapport au sol. En effet, ledit moyen de détection (21) peut par exemple mesurer la distance séparant ladite structure d'attelage (9) dudit sol. Si cette mesure dépasse un seuil prédéterminé, ledit moyen de détection (21) en déduira que ladite structure d'attelage (9) est en position haute. D'une manière préférentielle, ledit seuil prédéterminé est réglable afin que la détection de la position haute de ladite structure d'attelage (9) ne soit pas perturbée par les dénivellations du sol. Une autre façon de faire consiste à mesurer l'angle de pivotement entre ladite structure d'attelage (9) et ladite poutre porteuse (15) au niveau de ladite deuxième articulation (17). Cet angle de pivotement varie certes lors du travail à cause des dénivellations du sol mais dans une plage relativement étroite. Par contre lorsque ladite structure d'attelage (9) occupe une position haute par rapport au sol, cet angle de pivotement est beaucoup plus important. En détectant une valeur importante de cet angle de pivotement, ledit moyen de détection (21) est capable de déterminer si ladite structure d'attelage (9) est en position haute.

La suite de la description va maintenant donner de plus amples détails sur des réalisations possibles dudit moyen de détection (21).

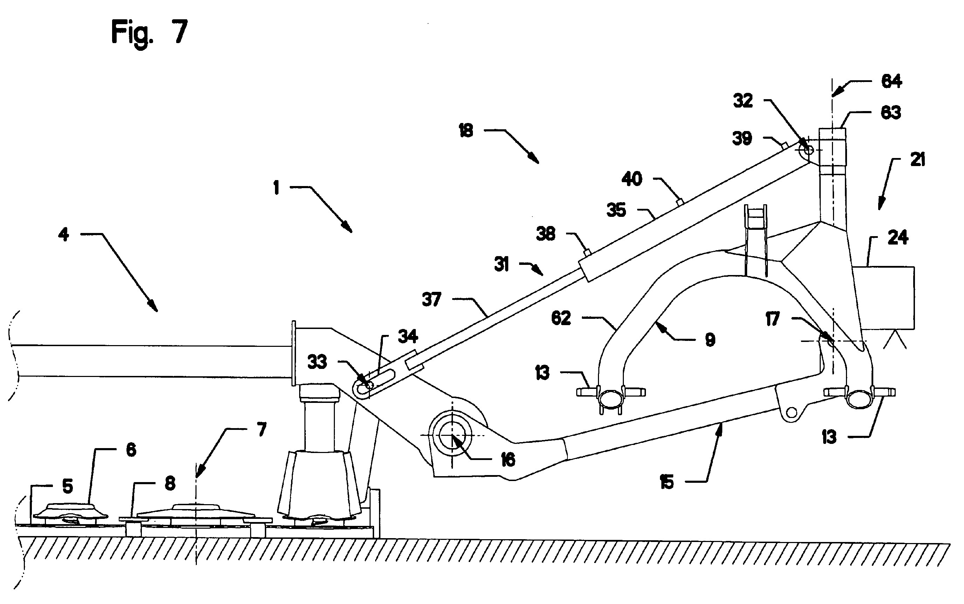

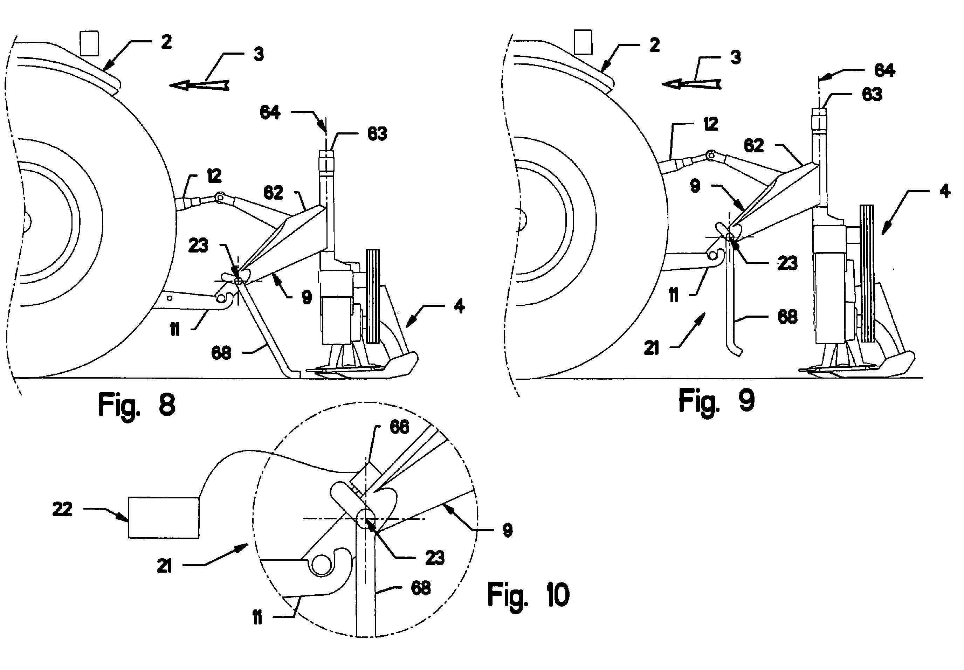

Pour mesurer la distance séparant ladite structure d'attelage (9) dudit sol et selon l'exemple de réalisation représenté sur les figures 8 à 10, ledit moyen de détection (21) comporte un organe de mesure (68) destiné à être en contact avec le sol. Une extrémité dudit organe de mesure (68) est liée à ladite machine de coupe, de préférence à ladite structure d'attelage (9), au moyen d'une articulation pivot (23) d'axe dirigé transversalement à ladite direction d'avance (3). A la lumière de la figure 8, la longueur dudit organe de mesure (68) est définie de manière à ce que l'autre extrémité dudit organe de mesure (68) touche le sol lorsque ladite structure d'attelage (9) est en position de travail. Ledit organe de mesure (68) s'étend alors avantageusement vers le bas et vers l'arrière. Par contre en se reportant à la figure 9, la longueur dudit organe de mesure (68) est telle que ce dernier ne touche plus le sol lorsque ladite structure d'attelage (9) est en position haute. Ledit organe de mesure (68) occupe alors une position sensiblement verticale. En détectant cette position sensiblement verticale dudit organe de mesure (68), ledit moyen de détection (21) est capable de déterminer si ladite structure d'attelage (9) est en position haute par rapport au sol. A cet effet et plus précisément à la lumière de la figure 10, ledit moyen de détection (21) comporte par exemple un contacteur (66) contre lequel vient s'appuyer ledit organe de mesure (68) en étant dans sa position sensiblement verticale. Une fois activé, ledit contacteur (66) envoie un signal audit moyen d'action (22) afin que ce dernier rende inactif ledit dispositif limiteur (19). Selon l'exemple de réalisation représenté à la figure 7 et d'une manière préférentielle, ledit moyen de détection (21) mesure la distance séparant ladite structure d'attelage (9) dudit sol sans être en contact avec ledit sol. On évite ainsi notamment les problèmes d'usure par frottement que l'on peut rencontrer avec les solutions nécessitant un contact avec le sol. Pour ce faire, ledit moyen de détection (21) comporte un générateur d'onde (24) lié à ladite machine de coupe (1), de préférence à ladite structure d'attelage (9). Ledit générateur d'onde (24) est destiné à émettre une onde en direction du sol et à mesurer le temps mis par cette onde pour revenir jusqu'à lui après avoir été réfléchie par le sol. Le type d'onde générée peut être du type électromagnétique tel qu'un rayon laser ou un écho radar, ou du type sonore par exemple des ultrasons. Si le temps mis par l'onde pour parcourir la distance est supérieur à une certaine valeur prédéfinie, ledit moyen de détection (21) en déduit alors que ladite structure d'attelage (9) est en position haute par rapport au sol. Dans un tel cas, ledit moyen de détection (21) envoie un signal audit moyen d'action (22) afin que ce dernier rende inactif ledit dispositif limiteur (19). Selon un autre exemple de réalisation, ledit organe de mesure (68) ou ledit générateur d'onde (24) n'est pas lié à ladite structure d'attelage (9) mais à ladite poutre porteuse (15) dans le voisinage immédiat de ladite deuxième articulation (17) de manière à ce que la mesure effectuée soit influencée au minimum par le pivotement de ladite poutre porteuse (15) par rapport à ladite structure d'attelage (9).

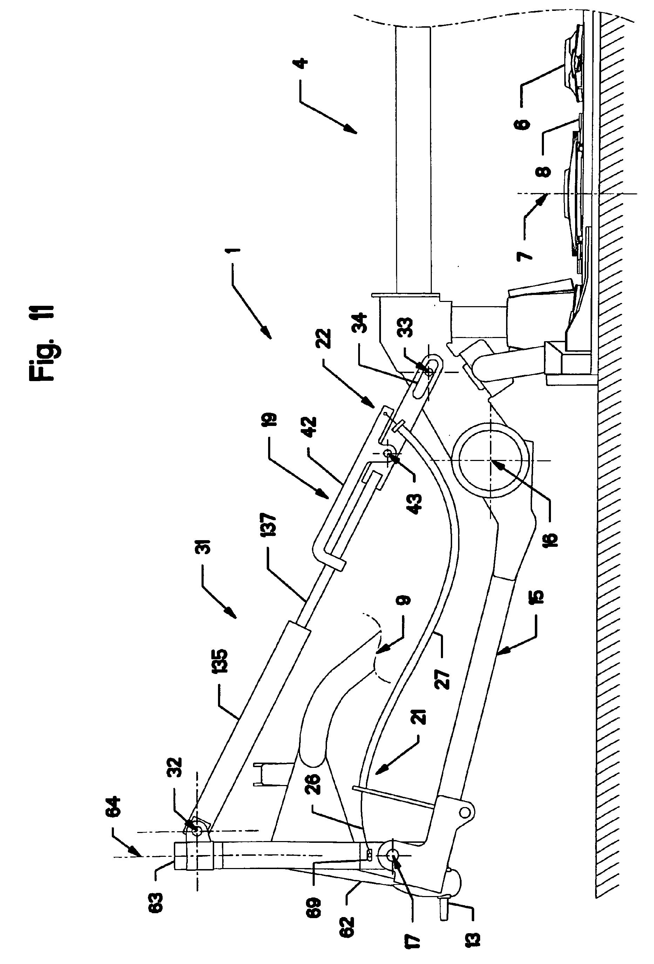

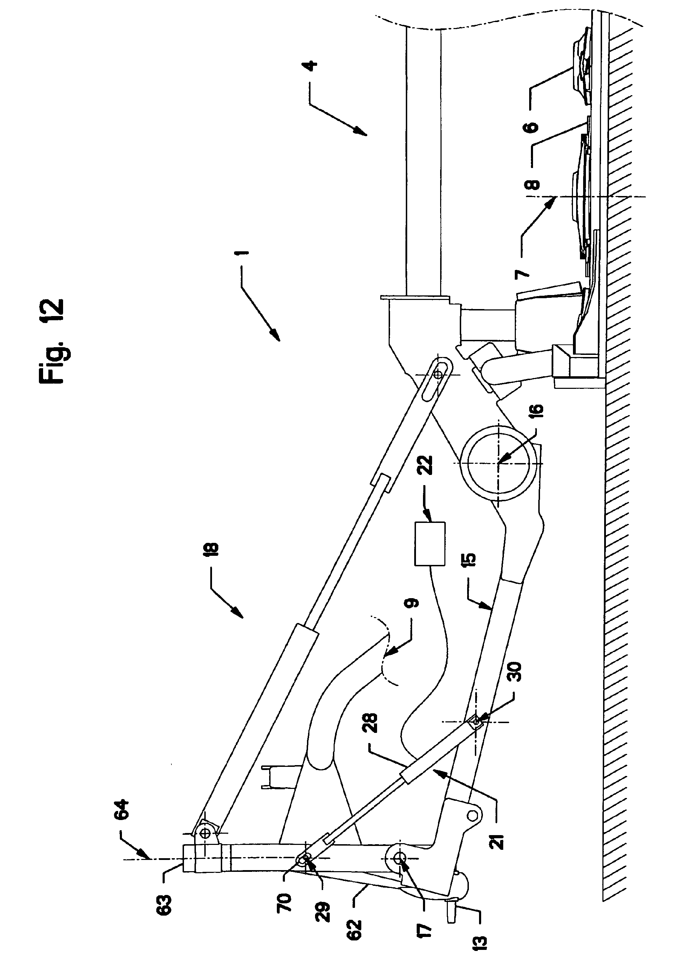

Comme annoncé précédemment, une autre façon de déterminer si ladite structure d'attelage (9) occupe une position haute par rapport au sol consiste à mesurer l'angle de pivotement entre ladite structure d'attelage (9) et ladite poutre porteuse (15). Pour ce faire ledit moyen de détection (21) comporte par exemple un capteur d'angle disposé dans le voisinage de ladite deuxième articulation (17). Dans les exemples de réalisation représentés sur les figures 11 et 12, cette mesure de l'angle de pivotement s'effectue plus précisément en mesurant une distance entre un point de ladite structure d'attelage (9) distant de l'axe de ladite deuxième articulation (17) et un point de ladite poutre porteuse (15) distant de l'axe de ladite deuxième articulation (17). A cet effet et à la lumière de la figure 11, ledit moyen de détection (21) comporte un câble (26) inséré dans une gaine (27). Une extrémité dudit câble (26) est liée à ladite structure d'attelage (9) alors qu'une extrémité de ladite gaine (27) est liée à ladite poutre porteuse (15). Ainsi lorsque ladite structure d'attelage (9) est soulevée du sol, le pivotement de ladite poutre porteuse (15) par rapport à ladite structure d'attelage (9) autour de ladite deuxième articulation (17) provoque un coulissement dudit câble (26) à l'intérieur de ladite gaine (27). Ce coulissement dudit câble (26) est ensuite utilisé pour commander ledit moyen d'action (22). D'une manière préférentielle, la liaison entre ladite gaine (27) et ladite poutre porteuse (15) et/ou la liaison entre ledit câble (26) et ladite structure d'attelage (9) s'effectue(ent) au moyen d'une lumière (69) autorisant un certain jeu. Ce jeu est suffisamment important pour que les débattements angulaires engendrés par les dénivellations du sol ne puissent pas provoquer un coulissement dudit câble (26). Selon un autre exemple de réalisation représenté à la figure 12, ledit moyen de détection (21) comporte cette fois un vérin (28) dont l'une des extrémités est liée à ladite structure d'attelage (9) au moyen d'une articulation pivot (29) d'axe sensiblement parallèle à l'axe de ladite deuxième articulation pivot (17). L'autre extrémité dudit vérin (28) est liée à ladite poutre porteuse (15) au moyen d'une autre articulation pivot (30) d'axe sensiblement parallèle à l'axe de ladite deuxième articulation pivot (17). Ainsi, lorsque ladite structure d'attelage (9) est soulevée du sol, le pivotement de ladite poutre porteuse (15) par rapport à ladite structure d'attelage (9) autour de ladite deuxième articulation (17) provoque une variation de la longueur dudit vérin (28). Cette variation de longueur provoque une variation du volume d'huile contenu dans ledit vérin (28). Cette variation du volume d'huile est ensuite utilisée pour commander ledit moyen d'action (22). D'une manière préférentielle, la liaison entre ledit vérin (28) et ladite poutre porteuse (15) et/ou la liaison entre ledit vérin (28) et ladite structure d'attelage (9) s'effectue(ent) au moyen d'une lumière (70) autorisant un certain jeu. Ce jeu est suffisamment important pour que les débattements angulaires engendrés par les dénivellations du sol ne puissent pas provoquer une variation du volume d'huile à l'intérieur dudit vérin (28) et donc une commande intempestive dudit moyen d'action (22).

Tout comme il existe différentes façons de déterminer si ladite structure d'attelage (9) occupe une position haute par rapport au sol, il existe également différentes possibilités pour limiter le pivotement dudit mécanisme de coupe (4) lors de l'actionnement dudit organe de manoeuvre (18). En effet, ledit dispositif limiteur (19) peut à titre d'exemple agir sur ledit organe de manoeuvre (18) de manière à arrêter prématurément l'action de ce dernier. Selon une autre approche possible, ledit dispositif limiteur (19) agit cette fois sur ledit mécanisme de coupe (4) de manière à restreindre son débattement angulaire autour de ladite première articulation (16).

La suite de la description va maintenant donner de plus amples détails sur des réalisations possibles dudit dispositif limiteur (19) et dudit moyen d'action (22).

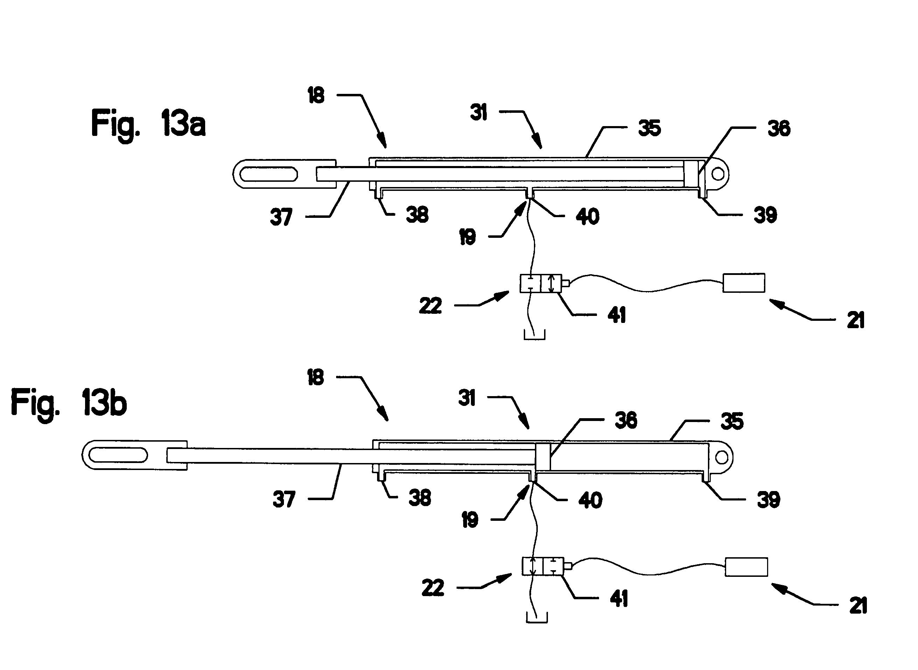

Dans les deux exemples de réalisation représentés sur les figures 7 et 13, et sur la figure 11, ledit organe de manoeuvre (18) est plus précisément un vérin hydraulique (31) dont une extrémité est liée à ladite structure d'attelage (9) au moyen d'une articulation pivot (32) d'axe dirigé suivant ladite direction d'avance (3). L'autre extrémité dudit vérin (31) est liée audit mécanisme de coupe (4) au moyen d'une articulation pivot (33) d'axe sensiblement parallèle à l'axe de ladite articulation pivot (32). D'une manière préférentielle, la liaison entre ledit vérin hydraulique (31) et ladite structure d'attelage (9) et/ou la liaison entre ledit vérin hydraulique (31) et ledit mécanisme de coupe (4) s'effectue(ent) en sus au travers d'une lumière (34) autorisant un certain jeu. Ce jeu permet audit mécanisme de coupe (4) de suivre les dénivellations du sol sans solliciter ledit vérin (31). D'une manière également préférentielle et plus précisément à la lumière de la figure 13, ledit vérin (31) se compose d'un corps (35) à l'intérieur duquel coulisse un piston (36). Ledit piston (36) est lié à une tige (37). Ledit vérin (31) étant du type double effet, ledit piston (36) partage alors ledit corps (35) en deux chambres. Ledit corps (35) est percé d'un premier orifice (38) et d'un deuxième orifice (39) destinés chacun à alimenter en fluide une chambre respective. D'une manière particulièrement avantageuse, ledit vérin (31) comporte encore un troisième orifice (40) disposé le long dudit corps (35) entre ledit premier et ledit deuxième orifices (38, 39). Ledit troisième orifice (40) constitue ledit dispositif limiteur (19) destiné à limiter le pivotement dudit mécanisme de coupe (4) lors de l'actionnement dudit organe de manoeuvre (18). En effet, dans cet exemple de réalisation ledit organe de manoeuvre (18) fonctionne de la manière suivante : lorsque ledit mécanisme de coupe (4) repose sur le sol, ledit piston (36) se situe entre ledit premier orifice (38) et ledit troisième orifice (40). En agissant sur le circuit hydraulique dudit véhicule moteur (2), l'utilisateur envoie de l'huile sous pression dans ledit vérin (31) au travers dudit premier orifice (38). Ledit piston (36) se déplace à l'intérieur dudit corps (35) vers ledit troisième orifice (40) en tirant avec lui ladite tige (37). Ledit mécanisme de coupe (4) pivote alors vers le haut. Dès que ledit piston (36) dépasse la position dudit troisième orifice (40), comme représenté à la figure 13b, l'huile sous pression provenant dudit premier orifice (38) s'échappe via ledit troisième orifice (40). Ledit piston (36) stoppe alors sa progression dans ledit corps (35). Le pivotement dudit mécanisme de coupe (4) est ainsi arrêté dans ladite position intermédiaire. Dans cet exemple de réalisation, une des possibilités de rendre inactif ledit dispositif limiteur (19) consiste à empêcher toute sortie d'huile via ledit troisième orifice (40). Pour ce faire, ledit moyen d'action (22) est réalisé par une vanne (41) disposée entre ledit troisième orifice (40) et le circuit hydraulique dudit véhicule moteur (2). Ledit moyen de détection (21) pilote ladite vanne (41) de manière à l'ouvrir lorsque ladite structure d'attelage (9) est en position basse. Par contre si ladite structure d'attelage (9) est en position haute, ledit moyen de détection (21) pilote la fermeture de ladite vanne (41). Ainsi lorsque ledit piston (36) dépasse la position dudit troisième orifice (40), ladite vanne (41) étant fermée, l'huile sous pression provenant dudit premier orifice (38) ne peut donc pas s'échapper via ledit troisième orifice (40). Ledit piston (36) continue alors sa course jusqu'à atteindre le fond dudit corps (35) comme représenté sur la figure 13a. Ledit mécanisme de coupe (4) est alors pivoté dans sa position de transport. Dans l'exemple de réalisation représenté sur les figures 7 et 13, ladite vanne (41) est une électrovanne. Cependant en fonction du moyen de détection (21) employé pour détecter la position haute de ladite structure d'attelage (9), ladite vanne (41) peut également être commandée hydrauliquement ou mécaniquement.

L'exemple de réalisation représenté sur la figure 11 montre une autre façon d'agir sur ledit vérin (31) de manière à arrêter prématurément l'action de ce dernier. En effet, ledit vérin (31) se compose cette fois d'un corps (135) à l'intérieur duquel coulisse un piston. Ledit piston est lié à une tige (137). Ledit dispositif limiteur (19) est cette fois réalisé au moyen d'une butée (42) liée à ladite tige (137) au moyen d'une articulation pivot (43). Ladite butée (42) est destinée à limiter la course de rentrée dudit vérin (31) en venant s'appuyer sur ledit corps (135). Pour rendre inactif ce dispositif limiteur (19), ledit moyen d'action (22) pivote ladite butée (42) autour de ladite articulation (43) de manière à ce que ladite butée (42) ne puisse plus s'appuyer contre ledit corps (135) lors de la rentrée de ladite tige (37). A la lumière de la figure 11, ledit moyen d'action (22) peut être réalisé en liant l'autre extrémité dudit câble (26) à ladite butée (42) et en liant l'autre extrémité de ladite gaine (27) à ladite tige (137). Ainsi la traction sur ledit câble (26) engendrée par la mise en position haute de ladite structure d'attelage (9) est transmise jusqu'à ladite butée (42) de manière à faire pivoter cette dernière. Selon d'autres exemples de réalisation non représentés, le pivotement de ladite butée (42) destiné à rendre inactif ledit dispositif limiteur (19) est engendré par un actionneur électrique, tel qu'un moteur, ou par un actionneur hydraulique, tel qu'un vérin.

D'une manière préférentielle dans les exemples de réalisation représentés sur les figures 7 et 11, les positions de ladite première articulation (16), de ladite deuxième articulation (17) et des articulations (32, 33) dudit vérin (31) sont déterminées en fonction principalement de la position du centre de gravité dudit mécanisme de coupe (4). Ainsi le raccourcissement dudit vérin (31) engendre également un couple vers le haut autour de ladite deuxième articulation (17) de manière à pouvoir décoller du sol ledit mécanisme de coupe (4). Dans le même but et selon un autre exemple de réalisation, ladite faucheuse (1) comporte en sus un deuxième dispositif limiteur destiné notamment à limiter vers le bas le pivotement autour de ladite deuxième articulation (17), de ladite poutre porteuse (15) par rapport à ladite structure d'attelage (9). Un tel deuxième dispositif limiteur sera décrit ultérieurement plus en détails.

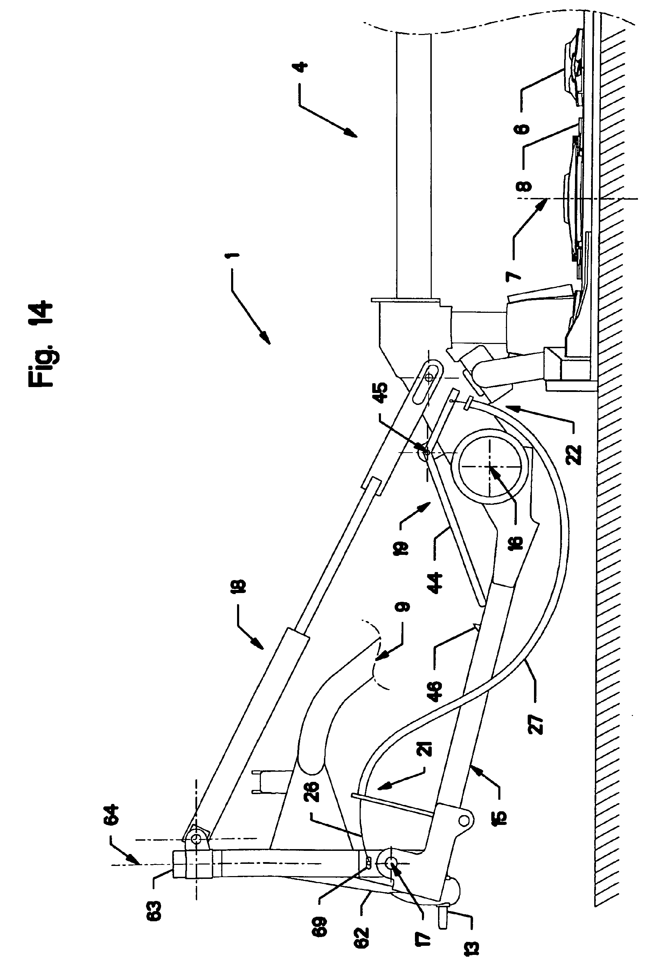

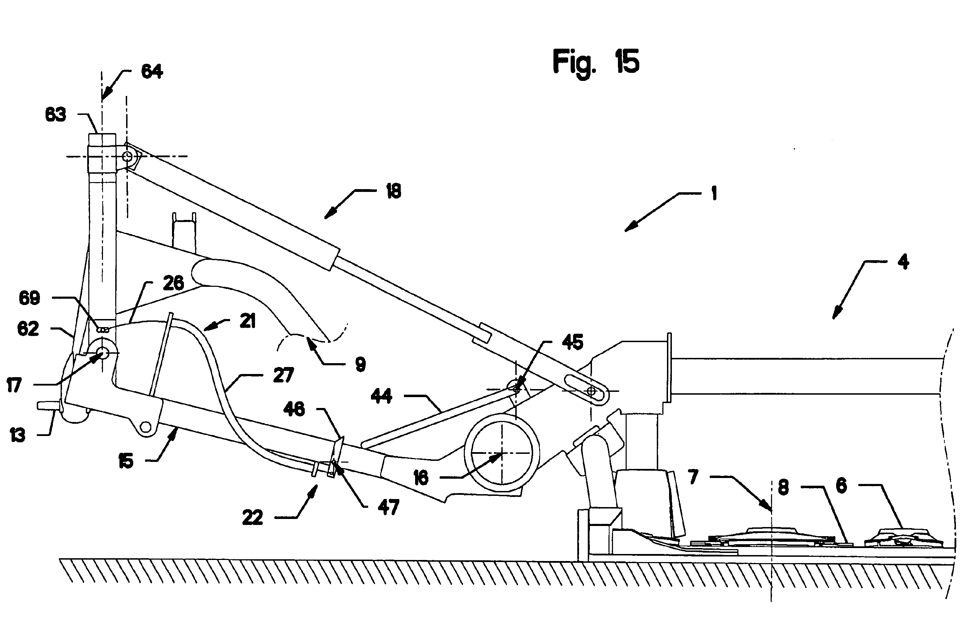

Selon deux autres exemples de réalisation représentés sur les figures 14 et 15, ledit dispositif limiteur (19) agit cette fois sur ledit mécanisme de coupe (4) de manière à restreindre son débattement angulaire autour de ladite première articulation (16). A la lumière de la figure 14, ledit dispositif limiteur (19) est réalisé au moyen d'une bielle (44) liée de manière pivotante audit mécanisme de coupe (4) au moyen d'une articulation (45) d'axe sensiblement parallèle à l'axe de ladite première articulation (16). Une extrémité de ladite bielle (44) est destinée à venir s'appuyer sur un arrêt (46) disposé sur ladite poutre porteuse (15). Pour rendre inactif ledit dispositif limiteur (19), ledit moyen d'action (22) pivote ladite bielle (44) autour de ladite articulation (45) de manière à ce que ladite bielle (44) ne puisse plus s'appuyer contre ledit arrêt (46) lors de l'actionnement dudit organe de manoeuvre (18). Pour ce faire, ledit moyen d'action (22) peut être réalisé en liant l'autre extrémité dudit câble (26) à ladite bielle (44) et en liant l'autre extrémité de ladite gaine (27) audit mécanisme de coupe (4). Ainsi la traction sur ledit câble (26) engendrée par la mise en position haute de ladite structure d'attelage (9) est transmise jusqu'à ladite bielle (44) de manière à faire pivoter cette dernière. Selon d'autres exemples de réalisation non représentés, le pivotement de ladite bielle (44) destiné à rendre inactif ledit dispositif limiteur (19) est engendré par un actionneur électrique, tel qu'un moteur, ou par un actionneur hydraulique, tel qu'un vérin. En se reportant à la figure 15, ledit arrêt (46) est cette fois lié de manière pivotante à ladite poutre porteuse (15) au moyen d'une articulation (47). Pour rendre inactif ledit dispositif limiteur (19), ledit moyen d'action (22) pivote alors ledit arrêt (46) autour de ladite articulation (47) de manière à ce que ladite bielle (44) ne puisse plus s'appuyer contre ledit arrêt (46) lors de l'actionnement dudit organe de manoeuvre (18). Pour ce faire, ledit moyen d'action (22) peut être réalisé en liant l'autre extrémité dudit câble (26) audit arrêt (46) et en liant l'autre extrémité de ladite gaine (27) à ladite poutre porteuse (15). Ainsi la traction sur ledit câble (26) engendrée par la mise en position haute de ladite structure d'attelage (9) est transmise jusqu'audit arrêt (46) de manière à faire pivoter ce dernier. Selon d'autres exemples de réalisation non représentés, le pivotement dudit arrêt (46) destiné à rendre inactif ledit dispositif limiteur (19) est engendré par un actionneur électrique, tel qu'un moteur, ou par un actionneur hydraulique, tel qu'un vérin.

On peut noter dans les exemples de réalisation employant un câble (26) coulissant dans une gaine (27), que ladite gaine (27) est flexible. De ce fait, les extrémités de ladite gaine (27) peuvent avantageusement se déplacer l'une par rapport à l'autre au gré des mouvements relatifs entre les pièces soutenant ladite gaine (27).

A la lumière des exemples de réalisation décrits et représentés sur les figures, ledit dispositif (20) destiné à rendre inactif ledit dispositif limiteur (19) peut être réalisé par toutes les combinaisons possibles entre les différents moyens de détection (21) et les différents moyens d'action (22) décrits ci-dessus.

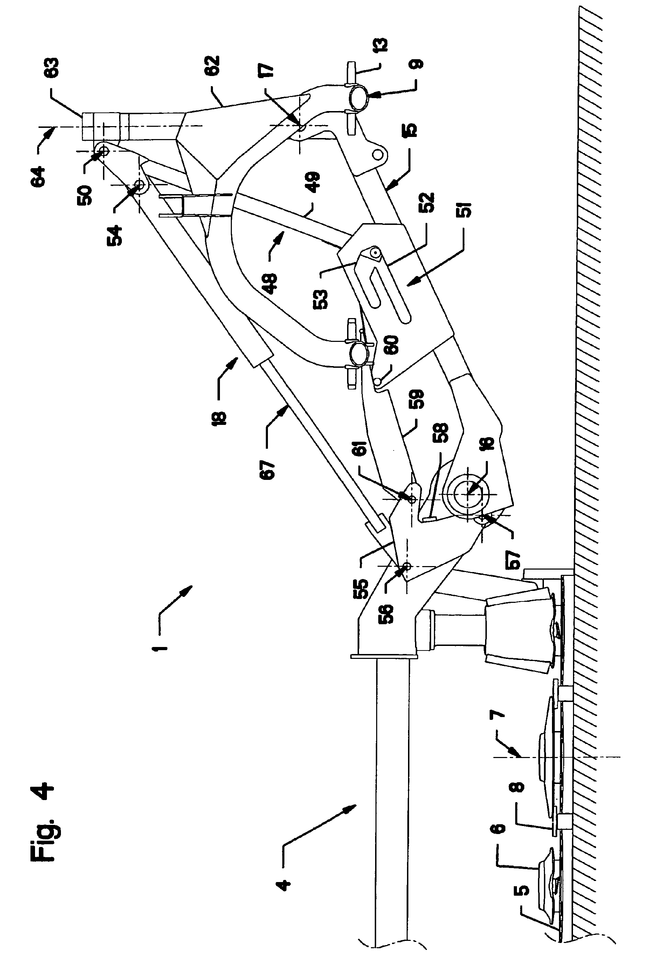

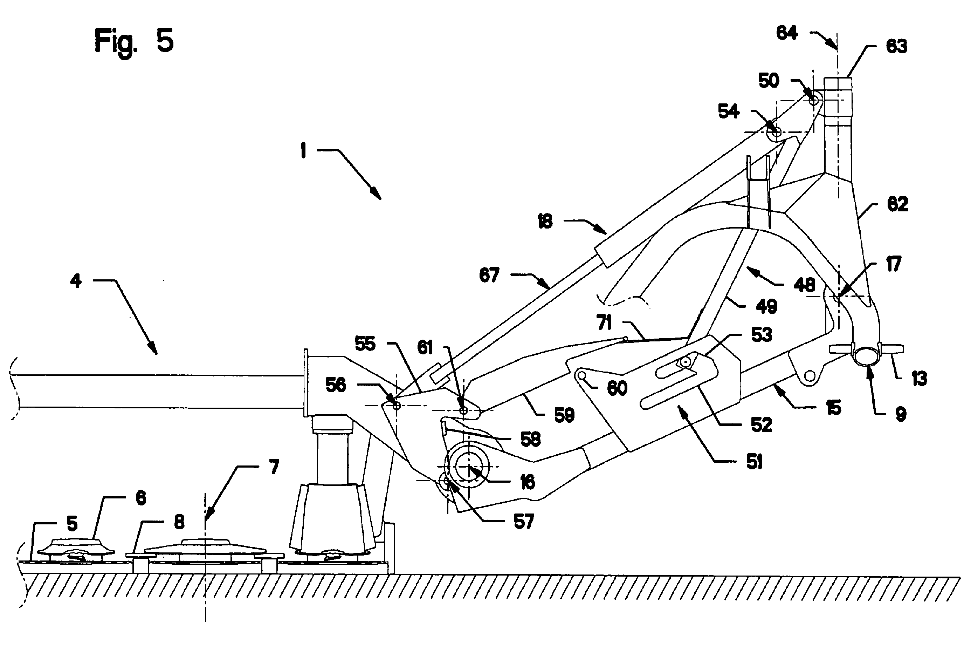

Les figures 2 à 6 représentent encore un autre exemple de réalisation dans lequel ladite faucheuse (1) comporte en sus un deuxième dispositif limiteur (48) destiné à limiter le pivotement autour de ladite deuxième articulation (17), de ladite poutre porteuse (15) par rapport à ladite structure d'attelage (9). A cet effet, ledit deuxième dispositif limiteur (48) comporte une bielle (49). Une extrémité de ladite bielle (49) est liée de manière pivotante à ladite structure d'attelage (9) au moyen d'une articulation (50) dont l'axe est sensiblement parallèle à l'axe de ladite deuxième articulation (17). L'autre extrémité de ladite bielle (49) coulisse à l'intérieur d'une gorge (51) prévue sur ladite poutre porteuse (15). Les dimensions de ladite gorge (51) déterminent l'amplitude de mouvement que peut avoir ladite poutre porteuse (15) par rapport à ladite structure d'attelage (9). D'une manière préférentielle, ladite gorge (51) comporte deux branches (52, 53) disposées l'une au-dessus de l'autre et reliées entre elles par l'une de leur extrémité. Ainsi vu de l'arrière, ladite gorge (51) reprend sensiblement la forme de la lettre « C ». A la lumière notamment de la figure 2, lorsque ladite structure d'attelage (9) est en position basse, l'extrémité de ladite bielle (49) coulisse dans la branche inférieure (52) de ladite gorge (51). Par contre à la lumière de la figure 5 lorsque ladite structure d'attelage (9) est en position haute, l'extrémité de ladite bielle (49) coulisse dans la branche supérieure (53) de ladite gorge (51). D'une manière particulièrement avantageuse, ladite bielle (49) et ladite gorge (51) constituent ainsi ledit moyen de détection (21) capable de détecter une position haute de ladite structure d'attelage (9). D'une manière préférentielle, ledit organe de manoeuvre (18) est un vérin (67) dont une extrémité est liée de manière pivotante à ladite bielle (49) au moyen d'une articulation pivot (54) dont l'axe est sensiblement parallèle à l'axe de ladite deuxième articulation (17). L'autre extrémité dudit vérin (67) est liée de manière pivotante à une deuxième bielle (55) au moyen d'une articulation pivot (56) dont l'axe est sensiblement parallèle à l'axe de ladite deuxième articulation (17). Ladite deuxième bielle (55) est liée de manière pivotante audit mécanisme de coupe (4) au moyen d'une articulation pivot (57) dont l'axe est sensiblement parallèle à l'axe de ladite deuxième articulation (17). En position de travail et à la lumière de la figure 2, ladite deuxième bielle (55) permet audit mécanisme de coupe (4) de pivoter autour de ladite première articulation (16) sans solliciter ledit vérin (67). Pour sa part, ladite poutre porteuse (15) peut pivoter autour de ladite deuxième articulation (17) dans les limites autorisées par ladite branche inférieure (52). Lorsque l'utilisateur alimente ledit vérin (67) en fluide sous pression de manière à le raccourcir, ladite deuxième bielle (55) pivote autour de ladite articulation (57) jusqu'à venir en butée contre un arrêt (58) prévu sur ledit mécanisme de coupe (4). Un raccourcissement supplémentaire dudit vérin (67) provoque un pivotement dudit mécanisme de coupe (4) autour de ladite première articulation (16) et de ladite deuxième articulation (17). D'une manière avantageuse, la force générée par ledit vérin (31) engendre un couple sur ladite bielle (49) autour de ladite articulation (50). Ce couple sur ladite bielle (49) participe, via ladite gorge (51), à la création d'un autre couple vers le haut sur ladite poutre porteuse (15) autour de ladite deuxième articulation (17). Ainsi ledit mécanisme de coupe (4) sera tout d'abord soulevé en restant sensiblement parallèle au sol avant de pivoter franchement autour de ladite première articulation (16). On évite ainsi que ledit mécanisme de coupe (4), surtout ledit carter (5), marque le sol lors de la mise en position intermédiaire. D'autres détails concernant la création du couple autour de ladite deuxième articulation (17) ont été donnés lors de la description des exemples de réalisations représentés aux figures 7 et 11. En se reportant à la figure 3, le pivotement autour de ladite deuxième articulation (17) s'arrête lorsque ladite bielle (49) vient en appui contre l'extrémité de ladite branche inférieure (52). Pour sa part, le pivotement autour de ladite première articulation (16) s'arrête lorsqu'une troisième bielle (59) vient en appui contre un arrêt (60) prévu sur ladite poutre porteuse (15). Ladite troisième bielle (59) et ledit arrêt (60) constituent alors ledit premier dispositif limiteur (19). Ladite troisième bielle (59) est par exemple liée de manière pivotante audit mécanisme de coupe (4). Cependant, dans cet exemple de réalisation, ladite troisième bielle (59) est avantageusement liée de manière pivotante à ladite deuxième bielle (55) au moyen d'une articulation (61) dont l'axe est sensiblement parallèle à l'axe de ladite deuxième articulation (17). Ainsi dans la position intermédiaire telle que représentée à la figure 3, les forces engendrées par ladite troisième bielle (59) pour arrêter ledit vérin (67) ne transitent pas par ledit mécanisme de coupe (4) mais uniquement par ladite deuxième bielle (55). De ce fait, on évite de solliciter inutilement ledit mécanisme de coupe (4). Les figures 4 à 6 illustrent différentes étapes lors du passage d'une position de travail à une position de transport. En partant de la position de travail et à la lumière de la figure 4, l'utilisateur agit tout d'abord sur ledit dispositif d'attelage (10) dudit véhicule moteur (2) pour mettre ladite structure d'attelage (9) en position haute. Ce faisant, l'extrémité de ladite bielle (49) coulisse jusque dans la zone de jonction entre ladite branche inférieure (52) et ladite branche supérieure (53) de ladite gorge (51). Puis à la lumière de la figure 5, l'utilisateur alimente en fluide sous pression ledit vérin (67) de manière à le raccourcir. Avec ce raccourcissement dudit vérin (67), ladite deuxième bielle (55) pivote autour de ladite articulation (57) jusqu'à venir en butée contre ledit arrêt (58) prévu sur ledit mécanisme de coupe (4). Un raccourcissement supplémentaire dudit vérin (67) engendre une montée de l'extrémité de ladite bielle (49) dans la branche supérieure (53) de ladite gorge (51). D'une manière particulièrement avantageuse, cette montée de l'extrémité de ladite bielle (49) dans ladite branche supérieure (53) est employée pour rendre inactif ledit premier dispositif limiteur (19). Ainsi dans l'exemple de réalisation représenté sur les figures 2 à 6, il est prévu une lame (71) liée rigidement à ladite bielle (49). Ladite lame (71) est destinée agir sur ladite troisième bielle (59) lorsque l'extrémité de ladite bielle (49) monte dans ladite branche supérieure (53), afin que ladite troisième bielle (59) ne puisse plus alors venir buter contre ledit arrêt (60). En se reportant à la figure 6, ledit vérin (67) peut ainsi poursuivre sa rétraction jusqu'à amener ladite faucheuse (1) en position de transport. Dans cet exemple de réalisation, ladite bielle (49), ledit vérin (67) et ladite lame (71) constituent ainsi ledit moyen d'action (22).

La faucheuse (1) qui vient d'être décrite n'est qu'un exemple qui ne saurait en aucun cas limiter l'invention. Des modifications restent possibles notamment en ce qui concerne la constitution des divers éléments ou par substitution d'équivalents techniques sans pour autant sortir du domaine de protection défini par les revendications suivantes.

Ainsi, ladite structure d'attelage (9) peut comporter plus précisément un cadre (62) et un arbre (63). Ledit arbre (63) est lié audit cadre (62) au moyen d'une articulation pivot (64) d'axe dirigé vers le haut. Ledit cadre (62) supporte lesdits points d'attelage (13, 14). Dans ce cas, ladite poutre porteuse (15) et ledit organe de manoeuvre (18) sont plus précisément liés audit arbre (63). Il est également prévu un dispositif de sécurité (65) destiné à empêcher, lors de conditions de travail normales, tout pivotement autour de ladite articulation (64). Par contre en cas de rencontre avec un obstacle, ledit dispositif de sécurité (65) se déclenche ainsi ledit mécanisme de coupe (4) et ladite poutre porteuse (15) peuvent pivoter vers l'arrière par rapport audit véhicule moteur (2). Dans l'exemple de réalisation représenté à la figure 1, ledit dispositif de sécurité (65) est lié d'une part audit cadre (62) et d'autre part à ladite poutre porteuse (15). Le seuil de déclenchement dudit dispositif de sécurité (65) est avantageusement réglable. Un tel dispositif de sécurité (65) est connu de l'homme de l'art, il ne sera donc pas décrit davantage.

Ladite faucheuse (1) peut encore comporter un dispositif d'allégement destiné lors du travail à reporter au moins une partie du poids dudit mécanisme de coupe (4) sur ledit véhicule moteur (2). On réduit de la sorte la pression d'appui dudit mécanisme de coupe (4) sur le sol lors du travail d'où une faucheuse (1) demandant moins de puissance de traction et plus respectueuse du tapis végétal. Un tel dispositif d'allégement est connu de l'homme du métier. Il comporte par exemple des ressorts de traction disposés entre ladite structure d'attelage (9) et ledit mécanisme de coupe (4).

De plus, ledit mécanisme de coupe (4) peut encore comporter un dispositif de traitement destiné à accélérer le séchage du produit coupé.

## Revendications

1. Machine de coupe comportant:
- un mécanisme de coupe (4),
- une structure d'attelage (9) destinée à être liée à un dispositif d'attelage (10) d'un véhicule moteur (2), ladite structure d'attelage (9) pouvant être soulevée ou abaissée par rapport au sol,
- une poutre porteuse (15) liée d'une part audit mécanisme de coupe (4) au moyen d'une première articulation pivot (16) d'axe au moins sensiblement dirigé suivant une direction de travail (3), et d'autre part à ladite structure d'attelage (9) au moyen d'une deuxième articulation pivot (17) d'axe sensiblement parallèle à l'axe de ladite première articulation pivot (16),
- un organe de manoeuvre (18) destiné à faire pivoter ledit mécanisme de coupe (4) d'une position de travail où ledit mécanisme de coupe (4) repose au moins partiellement sur le sol, à une position de transport où ledit mécanisme de coupe (4) est pivoté vers le haut, et
- un dispositif limiteur (19) destiné à limiter le pivotement vers le haut dudit mécanisme de coupe (4) par rapport à ladite poutre porteuse (15) autour de ladite première articulation pivot (16), de manière à arrêter ledit mécanisme de coupe (4) dans une position intermédiaire lors de l'actionnement dudit organe de manoeuvre (18),
***caractérisée par le fait qu*'**elle comporte en sus un dispositif (20) destiné à rendre automatiquement ledit dispositif limiteur (19) inactif lorsque ladite structure d'attelage (9) occupe une position haute par rapport au sol.

2. Machine de coupe selon la revendication 1, ***caractérisée par le fait que*** ledit dispositif (20) prévu pour rendre inactif ledit dispositif limiteur (19) se compose d'un moyen de détection (21) destiné à déterminer si ladite structure d'attelage (9) est en position haute par rapport au sol, et d'un moyen d'action (22) destiné à agir sur ledit dispositif limiteur (19) de manière à rendre ce dernier inactif.

3. Machine de coupe selon la revendication 2, ***caractérisée par le fait que*** ledit moyen de détection (21) comporte un organe de mesure (68) dont une extrémité est liée à ladite machine de coupe (1), l'autre extrémité dudit organe de mesure (68) étant destinée à venir au contact du sol.

4. Machine de coupe selon la revendication 3, ***caractérisée par le fait que*** l'extrémité dudit organe de mesure (68) est liée de préférence à ladite structure d'attelage (9) au moyen d'une articulation pivot (23) d'axe dirigé transversalement à ladite direction d'avance (3), et ***par le fait que*** la longueur dudit organe de mesure (68) est définie de manière à ce que l'autre extrémité dudit organe de mesure (68) touche le sol lorsque ladite structure d'attelage (9) est en position de travail, et de manière à ce que cette autre extrémité dudit organe de mesure (68) ne touche plus le sot lorsque ladite structure d'attelage (9) est en position haute.

5. Machine de coupe selon la revendication 2, ***caractérisée par le fait que*** ledit moyen de détection (21) comporte un générateur d'onde (24) lié à ladite machine de coupe (1), de préférence à ladite structure d'attelage (9), ledit générateur d'onde (24) étant destiné à émettre une onde en direction du sol et à mesurer le temps mis par cette onde pour revenir jusqu'à lui après avoir été réfléchie par le sol.

6. Machine de coupe selon la revendication 2, ***caractérisée par le fait que*** ledit moyen de détection (21) comporte un capteur destiné à mesurer l'angle de pivotement autour de ladite deuxième articulation (17) entre ladite structure d'attelage (9) et ladite poutre porteuse (15).

7. Machine de coupe selon la revendication 2, ***caractérisée par le fait que*** ledit moyen de détection (21) comporte un câble (26) inséré dans une gaine (27), une extrémité dudit câble (26) étant liée à ladite structure d'attelage (9) et une extrémité de ladite gaine (27) étant liée à ladite poutre porteuse (15) de manière à ce que lorsque ladite structure d'attelage (9) est soulevée du sol, le pivotement de ladite poutre porteuse (15) par rapport à ladite structure d'attelage (9) autour de ladite deuxième articulation (17) provoque un coulissement dudit câble (26) à l'intérieur de ladite gaine (27).

8. Machine de coupe selon la revendication 7, ***caractérisée par le fait que* la** liaison entre ladite gaine (27) et ladite poutre porteuse (17) et/ou la liaison entre ledit câble (26) et ladite structure d'attelage (9) s'effectue au moyen d'une lumière (69) autorisant un certain jeu, ce jeu étant suffisamment important pour que les débattements angulaires autour de ladite deuxième articulation (17) engendrés par les dénivellations du sol ne puissent pas provoquer un coulissement dudit câble (26) à l'intérieur de ladite gaine (27).

9. Machine de coupe selon la revendication 2, ***caractérisée par le fait que*** ledit moyen de détection (21) comporte un vérin (28), l'une des extrémités dudit vérin (28) étant liée à ladite structure d'attelage (9) au moyen d'une articulation pivot (29) d'axe sensiblement parallèle à l'axe de ladite deuxième articulation pivot (17), et l'autre extrémité dudit vérin (28) étant liée à ladite poutre porteuse (15) au moyen d'une autre articulation pivot (30) d'axe sensiblement parallèle à l'axe de ladite deuxième articulation pivot (17), de manière à ce que lorsque ladite structure d'attelage (9) est soulevée du sol, le pivotement de ladite poutre porteuse (15) par rapport à ladite structure d'attelage (9) autour de ladite deuxième articulation (17) provoque une variation de la longueur dudit vérin (28).

10. Machine de coupe selon l'une quelconque des revendications 1 à 9, ***caractérisée par le fait que*** ledit organe de manoeuvre (18) est un vérin hydraulique (31) dont une extrémité est liée à ladite structure d'attelage (9) au moyen d'une articulation pivot (32) d'axe dirigé suivant ladite direction d'avance (3), l'autre extrémité dudit vérin (31) étant liée audit mécanisme de coupe (4) au moyen d'une articulation pivot (33) d'axe sensiblement parallèle à l'axe de ladite articulation pivot (32).

11. Machine de coupe selon la revendication 10, ***caractérisée par le fait que*** ledit vérin (31) se compose d'un corps (35) à l'intérieur duquel coulisse un piston (36), ledit piston (36) partageant ledit corps (35) en deux chambres, ledit corps (35) étant percé d'un premier orifice (38) et d'un deuxième orifice (39) destinés chacun à alimenter en fluide une chambre respective, et ***par le fait que*** ledit dispositif limiteur (19) destiné à limiter le pivotement dudit mécanisme de coupe (4) lors de l'actionnement dudit organe de manoeuvre (18) est réalisé au moyen d'un troisième orifice (40) disposé le long dudit corps (35) entre ledit premier et ledit deuxième orifices (38, 39).

12. Machine de coupe selon les revendications 2 et 11, ***caractérisée par le fait que*** ledit moyen d'action (22) est réalisé par une vanne (41) disposée entre ledit-troisième orifice (40)- et le circuit hydraulique dudit véhicule moteur (2), ladite vanne (41) étant pilotée par ledit moyen de détection (21) de manière à être ouverte lorsque ladite structure d'attelage (9) est en position de travail, et de manière à être fermée lorsque ladite structure d'attelage (9) est en position haute.

13. Machine de coupe selon la revendication 10, ***caractérisée par le fait que*** ledit dispositif limiteur (19) est réalisé au moyen d'une butée (42) liée à une tige (137) dudit vérin (31) au moyen d'une articulation pivot (43), ladite butée (42) étant destinée à limiter la course de rentrée dudit vérin (31) en venant s'appuyer sur le corps (135) dudit vérin (31).

14. Machine de coupe selon la revendication 2, ***caractérisée par le fait que*** ledit dispositif limiteur (19) est réalisé au moyen d'une bielle (44) liée de manière pivotante audit mécanisme de coupe (4) au moyen d'une articulation (45) d'axe sensiblement parallèle à l'axe de ladite première articulation (16), une extrémité de ladite bielle (44) étant destinée à venir s'appuyer sur un arrêt (46) disposé sur ladite poutre porteuse (15) de manière à restreindre le débattement angulaire dudit mécanisme de coupe (4) autour de ladite première articulation (16).

15. Machine de coupe selon la revendication 14, ***caractérisée par le fait que*** pour rendre inactif ledit dispositif limiteur (19), ledit moyen d'action (22) pivote ladite bielle (44) autour de ladite articulation (45) de manière à ce que ladite bielle (44) ne puisse plus s'appuyer contre ledit arrêt (46) lors de l'actionnement dudit organe de manoeuvre (18).

16. Machine de coupe selon la revendication 14, ***caractérisée par le fait que*** ledit arrêt (46) est lié de manière pivotante à ladite poutre porteuse (15) au moyen d'une articulation (47), **et *par le fait que*** pour rendre inactif ledit dispositif limiteur (19), ledit moyen d'action (22) pivote ledit arrêt (46) autour de ladite articulation (47) de manière à ce que ladite bielle (44) ne puisse plus s'appuyer contre ledit arrêt (46) lors- de l'actionnement dudit organe de manoeuvre (18).

17. Machine de coupe selon l'une quelconque des revendications 1 à 16, ***caractérisée par le fait qu***'elle comporte en sus un deuxième dispositif limiteur (48) destiné à limiter le pivotement autour de ladite deuxième articulation (17), de ladite poutre porteuse (15) par rapport à ladite structure d'attelage (9).

18. Machine de coupe selon la revendication 17, ***caractérisée par le fait que*** ledit deuxième dispositif limiteur (48) comporte une bielle (49), une extrémité de ladite bielle (49) étant liée de manière pivotante à ladite structure d'attelage (9) au moyen d'une articulation (50) dont l'axe est sensiblement parallèle à l'axe de ladite deuxième articulation (17), l'autre extrémité de ladite bielle (49) coulissant à l'intérieur d'une gorge (51) prévue sur ladite poutre porteuse (15).

19. Machine de coupe selon la revendication 18, ***caractérisée par le fait que*** ladite gorge (51) comporte deux branches (52, 53) disposées l'une au-dessus de l'autre et reliées entre elles par l'une de leur extrémité de manière à ce que :
- l'extrémité de ladite bielle (49) coulisse dans la branche inférieure (52) de ladite gorge (51) lorsque ladite structure d'attelage (9) est en position de travail, et
- l'extrémité de ladite bielle (49) coulisse dans la branche supérieure (53) de ladite gorge (51) lorsque ladite structure d'attelage (9) est en position haute.

20. Machine de coupe selon la revendication 18 ou 19, ***caractérisée par le fait que*** ledit organe de manoeuvre (18) est un vérin (67) dont une extrémité est liée de manière pivotante à ladite bielle (49) au moyen d'une articulation pivot (54) dont l'axe est sensiblement parallèle à l'axe de ladite deuxième articulation (17), l'autre extrémité dudit vérin (67) étant liée de manière pivotante à une deuxième bielle (55) au moyen d'une articulation pivot (56) dont l'axe est sensiblement parallèle à l'axe de ladite deuxième articulation (17), ladite deuxième bielle (55) étant liée de manière pivotante audit mécanisme de coupe (4) au moyen d'une articulation pivot (57) dont l'axe est sensiblement parallèle à l'axe de ladite deuxième articulation (17).

21. Machine de coupe selon l'une quelconque des revendications 17 à 20, ***caractérisée par le fait qu***'il est prévu une troisième bielle (59) destinée à venir en appui contre un arrêt (60) prévu sur ladite poutre porteuse (15).

22. Machine de coupe selon les revendications 20 et 21, ***caractérisée par le fait que*** ladite troisième bielle (59) est liée de manière pivotante à ladite deuxième bielle (55) au moyen d'une articulation (61) dont l'axe est sensiblement parallèle à l'axe de ladite deuxième articulation (17).

23. Machine de coupe selon la revendication 21 ou 22, ***caractérisée par le fait qu**'il* est prévu une lame (71) liée rigidement à ladite bielle (49), ladite lame (71) étant destinée agir sur ladite troisième bielle (59) lorsque l'extrémité de ladite bielle (49) monte dans ladite branche supérieure (53), afin que ladite troisième bielle (59) ne puisse plus alors venir buter contre ledit arrêt (60).

## Claims

1. Cutting machine comprising:
- a cutting mechanism (4),
- a hitch structure (9) intended to be connected to a hitch device (10) of a motor vehicle (2), the said hitch structure (9) being able to be raised or lowered relative to the ground,
- a carrier beam (15) connected on the one hand to the said cutting mechanism (4) by means of a first pivot articulation (16) with an axis which is at least substantially directed along a direction of work (3), and on the other hand to the said hitch structure (9) by means of a second pivot articulation (17) with an axis which is substantially parallel to the axis of the said first pivot articulation (16),
- an operating member (18) intended to cause the said cutting mechanism (4) to pivot from a working position in which the said cutting mechanism (4) rests at least partially on the ground, to a transport position in which the said cutting mechanism (4) is pivoted upward, and
- a limiter device (19) intended to limit the upward pivoting of the said cutting mechanism (4) relative to the said carrier beam (15) about the said first pivot articulation (16), so as to stop the said cutting mechanism (4) in an intermediate position when the said operating member (18) is actuated,
***characterized in* that** it further comprises a device (20) intended to automatically render the said limiter device (19) inactive when the said hitch structure (9) occupies a raised position relative to the ground.

2. Cutting machine as claimed in claim 1, ***characterized in* that** the said device (20) provided to render the said limiter device (19) inactive comprises a detection means (21) intended to determine whether the said hitch structure (9) is in raised position relative to the ground, and an actuating means (22) intended to act on the said limiter device (19) in order to render the latter inactive.

3. Cutting machine as claimed in claim 2, ***characterized in* that** the said detection means (21) comprises a measuring member (68) one end of which is connected to the said cutting machine (1), the other end of the said measuring member (68) being intended to come into contact with the ground.

4. Cutting machine as claimed in claim 3, **characterized in that** the end of the said measuring member (68) is preferably connected to the said hitch structure (9) by means of a pivot articulation (23) whose axis is directed transverse to the said direction of travel (3), and ***in* that** the length of the said measuring member (68) is defined such that the other end of the said measuring member (68) touches the ground when the said hitch structure (9) is in working position, and such that this other end of the said measuring member (68) no longer touches the ground when the said hitch structure (9) is in raised position.

5. Cutting machine as claimed in claim 2, ***characterized in* that** the said detection means (21) comprises a wave generator (24) connected to the said cutting machine (1), preferably to the said hitch structure (9), the said wave generator (24) being intended to emit a wave toward the ground and to measure the time taken by this wave to return to it after having been reflected by the ground.

6. Cutting machine as claimed in claim 2, ***characterized in* that** the said detection means (21) comprises a sensor intended to measure the pivot angle about the said second articulation (17) between the said hitch structure (9) and the said carrier beam (15).

7. Cutting machine as claimed in claim 2, ***characterized in* that** the detection means (21) comprises a cable (26) inserted in a sheath (27), one end of the said cable (26) being connected to the said hitch structure (9) and one end of the said (27) sheath being connected to the said carrier beam (15) such that, when the said hitch structure (9) is raised from the ground, the pivoting of the said carrier beam (15) relative to the said hitch structure (9) about the said second articulation (17) causes the said cable (26) to slide inside the said sheath (27).

8. Cutting machine as claimed in claim 7, ***characterized in* that** the connection between the said sheath (27) and the said carrier beam (17) and/or the connection between the said cable (26) and the said hitch structure (9) is achieved by means of an opening (69) allowing a certain clearance, this clearance being great enough in order that the angular deflections about the said second articulation (17) generated by the unvennesses of the ground cannot cause the said cable (26) to slide inside the said sheath (27).

9. Cutting machine as claimed in claim 2, ***characterized in* that** the said detection means (21) comprises a cylinder (28), one of the ends of the said cylinder (28) being connected to the said hitch structure (9) by means of a pivot articulation (29) whose axis is substantially parallel to the axis of the said second pivot articulation (17), and the other end of the said cylinder (28) being connected to the said carrier beam (15) by means of another pivot articulation (30) whose axis is substantially parallel to the axis of the said second pivot articulation (17), such that, when the said hitch structure (9) is raised from the ground, the pivoting of the said carrier beam (15) relative to the said hitch structure (9) about the said second articulation (17) causes a variation in the length of the said cylinder (28).

10. Cutting machine as claimed in anyone of claims 1 to 9, ***characterized in* that** the said operating member (18) is a hydraulic cylinder (31) one end of which is connected to the said hitch structure (9) by means of a pivot articulation (32) whose axis is directed in the said direction of travel (3), the other end of the said cylinder (31) being connected to the said cutting mechanism (4) by means of a pivot articulation (33) whose axis is substantially parallel to the axis of the said pivot articulation (32).

11. Cutting machine as claimed in claim 10, ***characterized in* that** the said cylinder (31) consists of a body (35) inside which slides a piston (36), the said piston (36) dividing the said body (35) into two chambers, the said body (35) being pierced with a first orifice (38) and a second orifice (39) each intended to supply a respective chamber with fluid, and ***in* that** the said limiter device (19), intended to limit the pivoting of the said cutting mechanism (4) when the said operating member (18) is actuated, is achieved by means of a third orifice (40) arranged along the said body (35) between the said first and said second orifices (38, 39).

12. Cutting machine as claimed in claims 2 to 11, ***characterized in* that** the said actuating means (22) is achieved by a valve (41) arranged between the said third orifice (40) and the hydraulic circuit of the said motor vehicle (2), the said valve (41) being controlled by the said detection means (21) so as to be open when the said hitch structure (9) is in working position, and so as to be closed when the said hitch structure (9) is in raised position.

13. Cutting machine as claimed in claim 10, ***characterized in* that** the said limiter device (19) is achieved by means of a stop (42) connected to a rod (137) of the said cylinder (31) by means of a pivot articulation (43), the said stop (42) being intended to limit the retraction of the said cylinder (31) by coming to rest against the body (135) of the said cylinder (31).

14. Cutting machine as claimed in claim 2, ***characterized in* that** the said limiter device (19) is achieved by means of a connecting rod (44) connected in pivoting manner to the said cutting mechanism (4) by means of an articulation (45) whose axis is substantially parallel to the axis of the said first articulation (16), one end of the said connecting rod (44) being intended to rest against a stop (46) arranged on the said carrier beam (15) so as to restrict the angular deflection of the said cutting mechanism (4) about the said first articulation (16).

15. Cutting machine as claimed in claim 14, ***characterized in* that**, to render the said limiter device (19) inactive, the said actuating means (22) pivots the said connecting rod (44) about the said articulation (45) so that the said connecting rod (44) can no longer rest against the said stop (46) when the said operating member (18) is actuated.

16. Cutting machine as claimed in claim 14, ***characterized in* that** the said stop (46) is connected in pivoting manner to the said carrier beam (15) by means of an articulation (47), and ***in* that**, to render the said limiter device (19) inactive, the said actuating means (22) pivots the said stop (46) about the said articulation (47) so that the said connecting rod (44) can no longer rest against the said stop (46) when the said operating member (18) is actuated.

17. Cutting machine as claimed in anyone of claims 1 to 16, ***characterized in* that** it further comprises a second limiter device (48) intended to limit the pivoting about the said second articulation (17) of the said carrier beam (15) relative to the said hitch structure (9).

18. Cutting machine as claimed in claim 17, ***characterized in* that** the said second limiter device (48) comprises a connecting rod (49), one end of the said connecting rod (49) being connected in pivoting manner to the said hitch structure (9) by means of an articulation (50) whose axis is substantially parallel to the axis of the said second articulation (17), the other end of the said connecting rod (49) sliding inside a groove (51) provided on the said carrier beam (15).

19. Cutting machine as claimed in claim 18, ***characterized in* that** the said groove (51) comprises two branches (52, 53) arranged one above the other and interconnected by one of their ends so that:
- the end of the said connecting rod (49) slides in the lower branch (52) of the said groove (51) when the said hitch structure (9) is in working position, and
- the end of the said connecting rod (49) slides in the upper branch (53) of the said groove (51) when the said hitch structure (9) is in raised position.

20. Cutting machine as claimed in claim 18 or 19, ***characterized in* that** the said operating member (18) is a cylinder (67) of which one end is connected in pivoting manner to the said connecting rod (49) by means of a pivot articulation (54) whose axis is substantially parallel to the axis of the said second articulation (17), the other end of the said cylinder (67) being connected in pivoting manner to a second connecting rod (55) by means of a pivot articulation (56) whose axis is substantially parallel to the axis of the said second articulation (17), the said second connecting rod (55) being connected in pivoting manner to the said cutting mechanism (4) by means of a pivot articulation (57) whose axis is substantially parallel to the axis of the said second articulation (17).

21. Cutting machine as claimed in anyone of claims 17 to 20, ***characterized in* that** a third connecting rod (59) intended to rest against a stop (60) provided on the said carrier beam (15) is provided.

22. Cutting machine as claimed in claims 20 and 21, ***characterized in* that** the said third connecting rod (59) is connected in pivoting manner to the said second connecting rod (55) by means of an articulation (61) whose axis is substantially parallel to the axis of the said second articulation (17).

23. Cutting machine as claimed in claim 21 or 22, ***characterized in* that** a blade (71) is provided which is rigidly connected to the said connecting rod (49), the said blade (71) being intended to act on the said third connecting rod (59) when the end of the said connecting rod (49) rises into the said upper branch (53) in order that the said third connecting rod (59) can then no longer butt against the said stop (60).

## Patentansprüche

1. Mähmaschine mit
- einem Schneidmechanismus (4),
- einer Kupplungsstruktur (9), die dazu bestimmt ist, mit einer Kupplungsvorrichtung (10) eines Zugfahrzeugs (2) verbunden zu werden, wobei die Kupplungsstruktur (9) in Bezug auf den Boden hochgehoben oder abgesenkt werden kann,
- einem Tragbalken (15), der einerseits mit dem Schneidmechanismus (4) mittels eines ersten Schwenkgelenks (16) mit einer Achse, die mindestens im Wesentlichen in eine Arbeitsrichtung (3) gerichtet ist, und andererseits mit der Kupplungsstruktur (9) mittels eines zweiten Schwenkgelenks (17) mit einer Achse, die im Wesentlichen parallel zur Achse des ersten Schwenkgelenks (16) ist, verbunden ist,
- einem Betätigungselement (18), das dazu bestimmt ist, den Schneidmechanismus (4) von einer Arbeitsposition, in der der Schneidmechanismus (4) zumindest teilweise auf dem Boden aufliegt, in eine Transportposition zu schwenken, in der der Schneidmechanismus (4) nach oben geschwenkt ist, und
- einer Begrenzungsvorrichtung (19), die dazu bestimmt ist, das Schwenken des Schneidmechanismus (4) nach oben in Bezug auf den Tragbalken (15) um das erste Schwenkgelenk (16) zu begrenzen, um den Schneidmechanismus (4) in einer Zwischenposition bei der Betätigung des Betätigungselements (18) anzuhalten,
***dadurch gekennzeichnet,* dass** sie zusätzlich eine Vorrichtung (20) umfasst, die dazu bestimmt ist, die Begrenzungsvorrichtung (19) automatisch inaktiv zu setzen, wenn die Kupplungsstruktur (9) eine obere Position in Bezug auf den Boden einnimmt.

2. Mähmaschine nach Anspruch 1, ***dadurch gekennzeichnet,* dass** die Vorrichtung (20), die dazu vorgesehen ist, die Begrenzungsvorrichtung (19) inaktiv zu setzen, aus einem Erfassungsmittel (21), das dazu bestimmt ist festzustellen, ob sich die Kupplungsstruktur (9) in der oberen Position in Bezug auf den Boden befindet, und einem Betätigungsmittel (22) besteht, das dazu bestimmt ist, auf die Begrenzungsvorrichtung ( 19) einzuwirken, um diese letztgenannte inaktiv zu setzen.

3. Mähmaschine nach Anspruch 2, ***dadurch gekennzeichnet,* dass** das Erfassungsmittel (21) ein Messglied (68) umfasst, dessen eines Ende mit der Mähmaschine (1) verbunden ist, wobei das andere Ende des Messgliedes (68) dazu bestimmt ist, mit dem Boden in Kontakt zu kommen.

4. Mähmaschine nach Anspruch 3, ***dadurch gekennzeichnet,* dass** das Ende des Messgliedes (68) vorzugsweise mit der Kupplungsstruktur (9) mittels eines Schwenkgelenks (23) mit einer quer zur Vorschubrichtung (3) ausgerichteten Achse verbunden ist, und ***dadurch**,* **dass** die Länge des Messgliedes (68) derart definiert ist, dass das andere Ende des Messgliedes (68) den Boden berührt, wenn sich die Kupplungsstruktur (9) in Arbeitsposition befindet, und dass dieses andere Ende des Messgliedes (68) den Boden nicht mehr berührt, wenn sich die Kupplungsstruktur (9) in der oberen Position befindet.

5. Mähmaschine nach Anspruch 2, ***dadurch gekennzeichnet,* dass** das Erfassungsmittel (21) einen Wellengenerator (24) umfasst, der mit der Mähmaschine (1), vorzugsweise mit der Kupplungsstruktur (9) verbunden ist, wobei der Wellengenerator (24) dazu bestimmt ist, in Richtung des Bodens eine Welle zu entsenden und die Zeit zu messen, die diese Welle benötigt, um zu ihm zurückzukehren, nachdem sie vom Boden reflektiert wurde.

6. Mähmaschine nach Anspruch 2, ***dadurch gekennzeichnet,* dass** das Erfassungsmittel (21) einen Sensor umfasst, der dazu bestimmt ist, den Schwenkwinkel um das zweite Gelenk (17) zwischen der Kupplungsstruktur (9) und dem Tragbalken (15) zu messen.

7. Mähmaschine nach Anspruch 2, ***dadurch gekennzeichnet,* dass** das Erfassungsmittel (21) ein Kabel (26) umfasst, das in einer Hülse (27) eingesetzt ist, wobei ein Ende des Kabels (26) mit der Kupplungsstruktur (9) und ein Ende der Hülse (27) mit dem Tragbalken (15) verbunden ist, so dass, wenn die Kupplungsstruktur (9) vom Boden hochgehoben ist, das Schwenken des Tragbalkens (15) in Bezug auf die Kupplungsstruktur (9) um das zweite Gelenk (17) ein Gleiten des Kabels (26) im Inneren der Hülse (27) hervorruft.

8. Mähmaschine nach Anspruch 7, ***dadurch gekennzeichnet,* dass** die Verbindung zwischen der Hülse (27) und dem Tragbalken (17) und/oder die Verbindung zwischen dem Kabel (26) und der Kupplungsstruktur (9) mittels einer Öffnung (69) erfolgt, die ein gewisses Spiel gestattet, wobei dieses Spiel ausreichend groß ist, dass der Winkelausschlag um das zweite Gelenk (17), der durch die Bodenunebenheiten hervorgerufen wird, nicht zu einem Gleiten des Kabels (26) im Inneren der Hülse (27) führen kann.

9. Mähmaschine nach Anspruch 2, ***dadurch gekennzeichnet,* dass** das Erfassungsmittel (21) einen Zylinder (28) umfasst, wobei eines der Enden des Zylinders (28) mit der Kupplungsstruktur (9) mittels eines Schwenkgelenks (29) mit einer Achse, die im Wesentlichen parallel zur Achse des zweiten Schwenkgelenks (17) ist, verbunden ist, und wobei das andere Ende des Zylinders (28) mit dem Tragbalken (15) mittels eines weiteren Schwenkgelenks (30) mit einer Achse, die im Wesentlichen parallel zur Achse des zweiten Schwenkgelenks (17) ist, verbunden ist, so dass, wenn die Kupplungsstruktur (9) vom Boden hochgehoben ist, das Schwenken des Tragbalkens (15) in Bezug auf die Kupplungsstruktur (9) um das zweite Gelenk (17) zu einer Änderung der Länge des Zylinders (28) führt.

10. Mähmaschine nach irgend einem der Ansprüche 1 bis 9, ***dadurch gekennzeichnet,* dass** das Betätigungselement (18) ein Hydraulikzylinder (31) ist, dessen eines Ende mit der Kupplungsstruktur (9) mittels eines Schwenkgelenks (32) mit einer in Vorschubrichtung (3) ausgerichteten Achse verbunden ist, wobei das andere Ende des Zylinders (31) mit dem Schneidmechanismus (4) mittels eines Schwenkgelenks (33), mit einer Achse, die im Wesentlichen parallel zur Achse des Schwenkgelenks (32) ist, verbunden ist.

11. Mähmaschine nach Anspruch 10, ***dadurch gekennzeichnet,* dass** der Zylinder (31) aus einem Körper (35) besteht, in dem ein Kolben (36) gleitet,
wobei der Kolben (36) den Körper (35) in zwei Kammern teilt, wobei der Körper (35) mit einer ersten Öffnung (38) und einer zweiten Öffnung (39) versehen ist, die jeweils dazu bestimmt sind, eine jeweilige Kammer mit Fluid zu versorgen, und ***dadurch,* dass** die Begrenzungsvorrichtung (19), die dazu bestimmt ist, das Schwenken des Schneidmechanismus (4) bei der Betätigung des Betätigungselements (18) zu begrenzen, mittels einer dritten Öffnung (40) ausgeführt ist, die entlang des Körpers (35) zwischen der ersten und der zweiten Öffnungen (38, 39) angeordnet ist.

12. Mähmaschine nach den Ansprüchen 2 und 11, ***dadurch gekennzeichnet,* dass** das Betätigungsmittel (22) durch ein Ventil (41) verwirklicht ist, das zwischen der dritten Öffnung (40) und des Hydraulikkreises des Zugfahrzeugs (2) angeordnet ist, wobei das Ventil (41) von dem Erfassungsmittel (21) derart gesteuert wird, dass es offen ist, wenn sich die Kupplungsstruktur (9) in Arbeitsposition befindet, und dass es geschlossen ist, wenn sich die Kupplungsstruktur (9) in der oberen Position befindet.

13. Mähmaschine nach Anspruch 10, ***dadurch gekennzeichnet,* dass** die Begrenzungsvorrichtung (19) mittels eines Anschlags (42) ausgeführt ist, der mit einer Stange (137) des Zylinders (31) mittels eines Schwenkgelenks (43) verbunden ist, wobei der Anschlag (42) dazu bestimmt ist, den Einziehweg des Zylinders (31) zu begrenzen, wobei er am Körper (135) des Zylinders (31) zur Anlage gelangt.

14. Mähmaschine nach Anspruch 2, ***dadurch gekennzeichnet,* dass** die Begrenzungsvorrichtung (19) mittels einer Stange (44) ausgeführt ist, die schwenkbar mit dem Schneidmechanismus (4) mittels eines Gelenks (45) mit einer Achse, die im Wesentlichen parallel zur Achse des ersten Gelenks (16) ist, verbunden ist, wobei ein Ende der Stange (44) dazu bestimmt ist, an einem Anschlag (46) zur Anlage zu gelangen, die auf dem Tragbalken (15) vorgesehen ist, um den Winkelausschlag des Schneidmechanismus (4) um das erste Gelenk (16) zu begrenzen.

15. Mähmaschine nach Anspruch 14, ***dadurch gekennzeichnet,* dass**, um die Begrenzungsvorrichtung (19) inaktiv zu setzen, das Betätigungsmittel (22) die Stange (44) um das Gelenk (45) schwenkt, so dass sich die Stange (44) nicht mehr an dem Anschlag (46) bei der Betätigung des Betätigungselements (18) abstützen kann.

16. Mähmaschine nach Anspruch 14, ***dadurch gekennzeichnet,* dass** der Anschlag (46) schwenkbar mit dem Tragbalken (15) mittels eines Gelenks (47) verbunden ist, und ***dadurch**,* **dass**, um die Begrenzungsvorrichtung (19) inaktiv zu setzen, das Betätigungsmittel (22) den Anschlag (46) um das Gelenk (47) schwenkt, so dass sich die Stange (44) nicht mehr an dem Anschlag (46) bei der Betätigung des Betätigungselements (18) abstützen kann.

17. Mähmaschine nach irgend einem der Ansprüche 1 bis 16, ***dadurch gekennzeichnet,* dass** sie zusätzlich eine zweite Begrenzungsvorrichtung (48) umfasst, die dazu bestimmt ist, das Schwenken des Tragbalkens (15) um das zweite Gelenk (17) in Bezug auf die Kupplungsstruktur (9) zu begrenzen.

18. Mähmaschine nach Anspruch 17, ***dadurch gekennzeichnet,* dass** die zweite Begrenzungsvorrichtung (48) eine Stange (49) umfasst, wobei ein Ende der Stange (49) schwenkbar mit der Kupplungsstruktur (9) mittels eines Gelenks (50) verbunden ist, dessen Achse im Wesentlichen parallel zur Achse des zweiten Gelenks (17) ist, wobei das andere Ende der Stange (49) im Inneren einer Rille (51) gleitet, die auf dem Tragbalken (15) vorgesehen ist.

19. Mähmaschine nach Anspruch 18, ***dadurch gekennzeichnet,* dass** die Rille (51) zwei Schenkel (52, 53) umfasst, die übereinander angeordnet und miteinander durch eines ihrer Enden verbunden sind, so dass:
- das Ende der Stange (49) in dem unteren Schenkel (52) der Rille (51) gleitet, wenn sich die Kupplungsstruktur (9) in Arbeitsposition befindet, und
- das Ende der Stange (49) in dem oberen Schenkel (53) der Rille (51) gleitet, wenn sich die Kupplungsstruktur (9) in der oberen Position befindet.

20. Mähmaschine nach Anspruch 18 oder 19, ***dadurch gekennzeichnet,* dass** das Betätigungselement (18) ein Zylinder (67) ist, dessen eines Ende schwenkbar mit der Stange (49) mittels eines Schwenkgelenks (54) verbunden ist, dessen Achse im Wesentlichen parallel zur Achse des zweiten Gelenks (17) ist, wobei das andere Ende des Zylinders (67) schwenkbar mit einer zweiten Stange (55) mittels eines Schwenkgelenks (56) verbunden ist, dessen Achse im Wesentlichen parallel zur Achse des zweiten Gelenks (17) ist, wobei die zweite Stange (55) schwenkbar mit dem Schneidmechanismus (4) mittels eines Schwenkgelenks (57) verbunden ist, dessen Achse im Wesentlichen parallel zur Achse des zweiten Gelenks (17) ist.

21. Mähmaschine nach irgend einem der Ansprüche 17 bis 20, ***dadurch gekennzeichnet,* dass** eine dritte Stange (59) vorgesehen ist, die dazu bestimmt ist, an einem Anschlag (60), der auf dem Tragbalken (15) vorgesehen ist, zur Anlage zu gelangen.

22. Mähmaschine nach den Ansprüchen 20 und 21, ***dadurch gekennzeichnet,* dass** die dritte Stange (59) schwenkbar mit der zweiten Stange (55) mittels eines Gelenks (61) verbunden ist, dessen Achse im Wesentlichen parallel zur Achse des zweiten Gelenks (17) ist.

23. Mähmaschine nach Anspruch 21 oder 22, ***dadurch gekennzeichnet,* dass** ein Blättchen (71) vorgesehen ist, das starr mit der Stange (49) verbunden ist, wobei das Blättchen (71) dazu bestimmt ist, auf die dritte Stange (59) einzuwirken, wenn das Ende der Stange (49) in den oberen Schenkel (53) steigt, damit die dritte Stange (59) nun nicht mehr an dem Anschlag (60) anschlagen kann.
